# EUROPÄISCHE PATENTANMELDUNG

(11) **EP 3 553 350 A1**
(43) Veröffentlichungstag der Anmeldung: **16.10.2019**
(21) Anmeldenummer: 19166971.2
(22) Anmeldetag: 03.04.2019
(51) Int. Cl.: F16J 9/06

(54) **ÖLABSTREIFKOLBENRING SOWIE KOLBEN ZUR AUFNAHME EINES ÖLABSTREIFKOLBENRINGS**

(30) Priorität: 09.04.2018 DE 102018108281
(71) Anmelder: Federal-Mogul Burscheid GmbH, 51399 Burscheid (DE)
(72) Erfinder: Bärenreuter, Dirk, 51519 Odenthal (DE); Bastuck, Thomas, 40625 Düsseldorf (DE)
(74) Vertreter: Döpp, Ludger

(57) **Zusammenfassung**

Mehrteiliger, insbesondere zweiteiliger Ölabstreifkolbenring, bestehend aus mindestens zwei, Laufflächen bildenden, radial äußeren Laufflächenstegen, einer inneren, zur Aufnahme eines insbesondere als Spiralfeder ausgebildeten, Federelements vorgesehenen Umfangsfläche sowie einer oberen und einer unteren Flankenfläche, wobei zur Erzeugung eines Twists der Ölabstreifkolbenring einen asymmetrischen Querschnitt aufweist, dergestalt, dass das Federelement innerhalb einer Nut der inneren Umfangsfläche positioniert ist und die in den Flankenflächen radial nach innen auslaufenden nutseitigen Schenkel radial unterschiedlich lang ausgebildet sind.

## Beschreibung

Die Erfindung betrifft einen mehrteiligen, insbesondere zweiteiligen Ölabstreifkolbenring.

Steigende Anforderungen an Emissionswerte führen in der Kolbengruppe zu der Anforderung Öltransport in die Brennkammer aber auch Blowby in Richtung Kurbelgehäuse so gering wie möglich zu halten, um die Entstehung schädlicher Emissionen zu minimieren.

Transportwege für Ölfluss und Blowby-Gas sind:
- Stoßspiel der Kolbenringe,
- Undichtigkeit der Lauffläche zum Zylinder,
- Axialspiel des Kolbenrings in der Kolbennut.

Hierbei trägt der Transport für Ölfluss und Blowby-Gas durch die Kolbennut den größten Anteil bei.

Die DE 1299945 offenbart einen Kolben für Brennkraftmaschinen mit, in Umfangsnuten eingelegten, Kolbenringen, wobei eine Umfangsnut an ihrer feuerraumseitigen Stirnwand in eine vertiefte Umfangsnut, mit im Vergleich zur gesamten Kolbenringnut geringeren axialer Höhe übergeht, und der Kolbenring aus einem Stützring T-förmigen Querschnitts, mit einem an der feuerraumseitigen Stirnfläche in die vertiefte Umfangsnut eingreifenden inneren Flanschteil und einem parallel zur Kolbenachse verlaufenden Stegteil sowie einem elastisch radial verschiebbaren Kolbenringteil besteht.

Die DE 10 2014 223 685 A1 betrifft einen zweiteiligen Kolbenring mit axialer Stabilisierung, umfassend einen Grundkörper mit einem im Wesentlichen L-förmigen Querschnitt, mit einer äußeren Lauffläche, die an einem Laufflächenschenkel angeordnet ist und mit einem Ringflankensteg, die zusammen zwei Schenkel des L-förmigen Querschnitts bilden und ein axiales Stabilisierungselement, das zumindest teilweise an dem Ringflankensteg anliegend angeordnet ist, wobei das Stabilisierungselement in axialer Richtung elastisch ist und wobei das Stabilisierungselement über den Laufflächenschenkel übersteht.

Durch die DE 2002876 ist ein Ölabstreifring bekannt geworden, dessen Ringteil mit einer oberen und einer unteren Gleitfläche sowie einem dazwischen gelegenen Öldurchlass in einer Ringnut eines Kolbens sitzt und auf der Innenseite in einer Ringnut mit Halbkreisquerschnitt eine Schraubenringfeder aufnimmt, wobei die Schraubenringfeder gegenüber der Mittelebene des Ölabstreifrings gegen die obere oder untere Gleitfläche hin versetzt ist und, dass mindestens eine Gleitfläche einen Anschnitt bzw. Einschnitt zur Änderung der Lage und Größe der Gleitfläche im Sinne einer Vergleichmäßigung des Flächendrucks auf beide Gleitflächen besitzt, womit eine Verspannung des Abstreifrings infolge der Versetzung der Schraubenringfeder vermieden wird.

Der Erfindung liegt die Aufgabe zugrunde, einen mehrteiligen, insbesondere zweiteiligen, Ölabstreifkolbenring dahingehend weiterzubilden, dass die Transportwege für Ölfluss und Blowby-Gas optimiert werden können, dergestalt, dass sie einen Beitrag zur Emissionssenkung leisten.

Darüber hinaus soll ein Kolben, beinhaltend einen derartigen Ölabstreifkolbenring, vorgeschlagen werden.

Diese Aufgabe wird gelöst durch einen mehrteiligen, insbesondere zweiteiligen Ölabstreifkolbenring, bestehend aus mindestens zwei, Laufflächen bildenden, radial äußeren Laufflächenstegen, einer inneren, zur Aufnahme eines insbesondere als Spiralfeder ausgebildeten, Federelements vorgesehenen Umfangsfläche sowie einer oberen und einer unteren Flankenfläche, wobei zur Erzeugung eines Twists der Ölabstreifkolbenring einen asymmetrischen Querschnitt aufweist, dergestalt, dass das Federelement innerhalb einer Nut der inneren Umfangsfläche positioniert ist und die in den Flankenflächen radial nach innen auslaufenden nutseitigen Schenkel radial unterschiedlich lang ausgebildet sind.

Vorteilhafte Weiterbildungen des erfindungsgemäßen Ölabstreifkolbenrings sind den zugehörigen Unteransprüchen zu entnehmen.

Die Aufgabe wird auch gelöst durch einen Kolben, beinhaltend einen Grundkörper, der mindestens eine Kolbennut zur Aufnahme eines Kolbenrings gemäß einem der Ansprüche 1 bis 3 aufweist.

Der erfindungsgemäße Kolben ist dadurch gekennzeichnet, dass eine Kolbennut obere und untere Flächenbereiche sowie eine innere Umfangsfläche umschließt, wobei der Kolbenring infolge seines negativen Twists dergestalt mit den Flächenbereichen in Wirkverbindung steht, dass eine Abdichtung an der radial inneren oberen Flankenfläche sowie eine Abdichtung an der radial äußeren unteren Flankenfläche herbeiführbar ist.

Vorteilhafte weitere Weiterbildungen des erfindungsgemäßen Kolbens sind den zugehörigen Unteransprüchen zu entnehmen.

Der Twist, insbesondere der negative Twist, wird erreicht durch asymmetrische Gestaltung des Kolbenringquerschnitts, insbesondere unterschiedliche radiale Ausprägung der die Spiralfeder zwischen sich aufnehmenden Kolbenringflanken.

Der negativ twistende Ring dichtet an der Ringunterflanke am Außenumfang und an der Ringoberflanke am Innenumfang gegen die zugehörigen Flächenbereiche der Kolbennut ab. Dadurch wird dem Öleintritt in die Nut entgegengewirkt.

Deshalb kann mit einem, insbesondere negativ, twistenden Ring der Ölfluss positiv beeinflusst werden, vorzugsweise im Teillastbetrieb und bei Unterdruck im Verbrennungsraum. Da auf den Ölabstreifkolbenring kaum noch Verbrennungsdruck wirkt, ist die Vertwistung permanent wirksam und somit auch eine Abdichtung gegen Blowby-Gase aus Richtung Brennraum möglich.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen Kolbenrings;
- Figur 2: Prinzipskizze eines den Kolbenring gemäß Figur 1 aufnehmenden Kolbens;

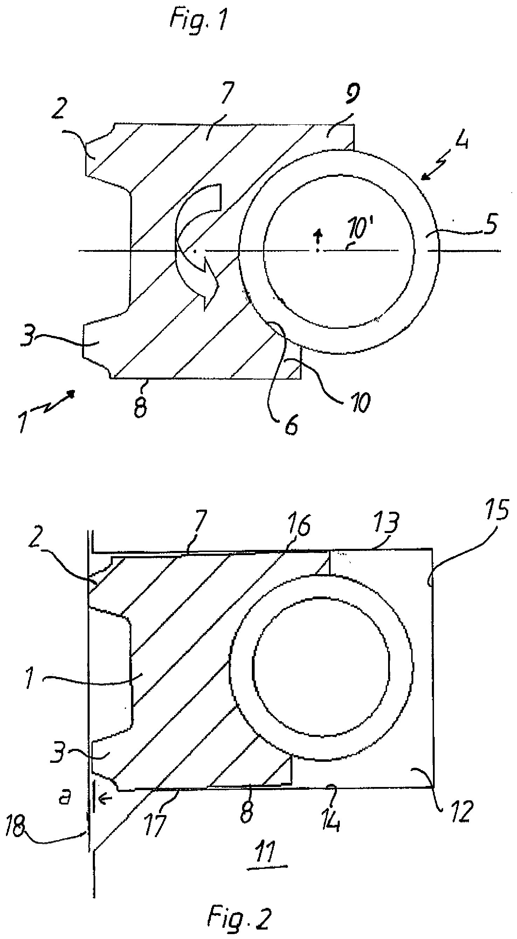

Figur 1 zeigt einen Ölabstreifkolbenring 1, beinhaltend zwei, Laufflächen bildende, Laufflächenstege 2,3, die bedarfsweise mit einer nicht weiter dargestellten Beschichtung versehen sein können. Die Laufflächenstege 2,3 bilden die Lauffläche gegenüber einer hier nicht weiter dargestellten Zylinderwand oder Laufbuchse. Der Kolbenring 1 beinhaltet des Weiteren eine innere Umfangsfläche 4, die zur Aufnahme eines spiralförmig ausgebildeten Federelements 5 mit einer Nut 6 versehen ist. Darüber hinaus beinhaltet der Kolbenring 1 eine obere Flankenfläche 7 sowie eine untere Flankenfläche 8. Zur Erzeugung eines negativen Twists (siehe Pfeil) sind die im Bereich der inneren Umfangsfläche 4 vorgesehenen Schenkel 9,10 im Bereich der oberen 7 sowie unteren Flankenfläche 8 radial unterschiedlich lang dimensioniert. Hierbei ist der Schenkel 9 radial länger ausgebildet als der Schenkel 10. Bezogen auf die Mittellinie 10' des Kolbenrings 1 kann das Federelement 5 in dieser Mittellinie 10' positioniert werden. Unterstützend besteht jedoch auch die Möglichkeit das Federelement 5 axial etwas außerhalb der Mittellinie 10', und zwar in Richtung der oberen Flankenfläche 7 vorzusehen, um den gewünschten negativen Twist weiterhin vorteilhaft zu beeinflussen.

Figur 2 zeigt in angedeuteter Weise einen Kolben 11, beinhaltend mindestens eine Kolbennut 12, die zur Aufnahme des in Figur 1 dargestellten Kolbenrings 1 vorgesehen ist. Die Kolbennut 12 wird gebildet durch einen oberen Flächenbereich 13 sowie einen unteren Flächenbereich 14 und eine innere Umfangsfläche 15. Bedingt durch den in Figur 1 angedeuteten negativen Twist (Pfeil) dichtet der Kolbenring 1 an folgenden Flächenbereichen ab, nämlich dem radial inneren Umfangsbereich 16 der oberen Flankenfläche 7 sowie dem radial äußeren Umfangsbereich 17 der unteren Flächenfläche 8. Es kommt - bedingt durch den negativen Twist - lediglich der obere Laufflächensteg 2 in Kontakt mit einer Gegenlauffläche 18, beispielsweise gebildet durch eine Zylinderwand. Zwischen dem unteren Laufflächensteg 3 und der Gegenlauffläche 18 ist ein definierter Spalt a gegeben.

### Bezugszeichenliste

- 1: Kolbenring
- 2: Lauflächensteg
- 3: Laufflächensteg
- 4: innere Umfangsfläche
- 5: Federelement (Spiralfeder)
- 6: Nut
- 7: obere Flankenfläche
- 8: untere Flankenfläche
- 9: oberer Schenkel
- 10: unterer Schenkel
- 10': Mittellinie
- 11: Kolben
- 12: Kolbennut
- 13: oberer Flächenbereich
- 14: unterer Flächenbereich
- 15: innere Umfangsfläche Kolbennut
- 16: radial innerer Umfangsbereich
- 17: radial äußerer Umfangsbereich
- 18: Gegenfläche

- a: Spalt

## Patentansprüche

1. Mehrteiliger, insbesondere zweiteiliger Ölabstreifkolbenring, bestehend aus mindestens zwei, Laufflächen bildenden, radial äußeren Laufflächenstegen (2,3), einer inneren, zur Aufnahme eines insbesondere als Spiralfeder ausgebildeten, Federelements (5) vorgesehenen Umfangsfläche (4) sowie einer oberen (7) und einer unteren Flankenfläche, wobei zur Erzeugung eines Twists der Ölabstreifkolbenring (1) einen asymmetrischen Querschnitt aufweist, dergestalt, dass das Federelement (5) innerhalb einer Nut (6) der inneren Umfangsfläche (4) positioniert ist und die in den Flankenflächen (7,8) radial nach innen auslaufenden nutseitigen Schenkel (9,10) radial unterschiedlich lang ausgebildet sind.

2. Kolbenring nach Anspruch 1, **dadurch gekennzeichnet, dass** zur Erzeugung eines negativen Twists der Schenkel (10) der unteren Flankenfläche (8) radial kürzer als der der oberen Flankenfläche (7) ausgebildet ist.

3. Kolbenring nach Anspruch 1 oder 2, **dadurch gekennzeichnet, dass** das Federelement (5), bezogen auf die axiale Bauhöhe des Kolbenrings (1), asymmetrisch zum Kolbenring (1), insbesondere der das Federelement (5) aufnehmenden Nut (6), vorgesehen ist.

4. Kolben, beinhaltend einen Grundkörper, der mindestens eine Kolbennut (12) zur Aufnahme eines Kolbenrings (1) gemäß einem der Ansprüche 1 bis 3 aufweist.

5. Kolben nach Anspruch 4, **dadurch gekennzeichnet, dass** eine Kolbennut (12) obere (13) und untere Flächenbereiche (14) sowie eine innere Umfangsfläche (15) umschließt, wobei der Kolbenring (1) infolge seines negativen Twists dergestalt mit den Flächenbereichen (14,15) in Wirkverbindung steht, dass eine Abdichtung am radial inneren oberen Flächenbereich (13) sowie eine Abdichtung am radial äußeren unteren Flächenbereich (14) der Kolbennut (12) herbeiführbar ist.

6. Kolben nach Anspruch 4 oder 5, **dadurch gekennzeichnet, dass** infolge des negativen Twists lediglich der obere Laufflächensteg (2) des Kolbenrings (1) an einer Gegenfläche (18), insbesondere einer Zylinderwand oder eine Laufbuchse anliegt, während der mindestens eine weitere Laufflächensteg (3) einen definierten radialen Abstand (a) zur Gegenfläche (18) aufweist.
